# EUROPÄISCHE PATENTSCHRIFT

(11) **EP 2 339 380 B1**
(45) Veröffentlichungstag und Bekanntmachung des Hinweises auf die Patenterteilung: **11.07.2012**
(21) Anmeldenummer: 09180382.5
(22) Anmeldetag: 22.12.2009
(51) Int. Cl.: G01T 1/29

(54) **Vorrichtung und Verfahren zum Auslesen von in einer Speicherleuchtstoffschicht gespeicherter Röntgeninformation**
Apparatus and method for reading out x-ray information stored in a storage phosphor layer
Dispositif et procédé pour la lecture d'images dans un écran luminescent stimulable

(43) Veröffentlichungstag der Anmeldung: 29.06.2011
(73) Patentinhaber: Agfa HealthCare NV, 2640 Mortsel (BE)
(72) Erfinder: Nitsche, Werner, D-82008 Unterhaching (DE); Gerstlauer, Bernd, D-81541 München (DE); Stallmeister, Stephan, D-85625 Glonn (DE)
(74) Vertreter: Linsmeier, Josef

(56) Entgegenhaltungen:
- EP-B1- 0 215 681
- JP-A- 2001 296 624

## Beschreibung

Die Erfindung betrifft eine Vorrichtung und ein entsprechendes Verfahren zum Auslesen von in einer Speicherleuchtstoffschicht gespeicherter Röntgeninformation gemäß dem Oberbegriff von Anspruch 1 bzw. 12.

Eine Möglichkeit zur Aufzeichnung von Röntgenbildern besteht darin, die durch ein Objekt, beispielsweise einen Patienten, hindurch tretende Röntgenstrahlung als latentes Bild in einer so genannten Speicherleuchtstoffschicht zu speichern. Zum Auslesen des latenten Bildes wird die Speicherleuchtstoffschicht mit Stimulationslicht bestrahlt und dabei zur Aussendung von Emissionslicht angeregt. Das Emissionslicht, dessen Intensität dem in der Speicherleuchtstoffschicht gespeicherten Bild entspricht, wird von einem optischen Detektor erfasst und in elektrische Signale umgewandelt. Die elektrischen Signale werden nach Bedarf weiterverarbeitet und schließlich für eine Auswertung, insbesondere zu medizinisch-diagnostischen Zwecken, bereitgestellt, indem sie an einem entsprechenden Ausgabegerät, wie z. B. einem Monitor oder Drucker, ausgegeben werden.

Aus JP 2001-296624 A ist eine Vorrichtung bekannt, bei welcher zur Verminderung des Dunkelrauschens des Detektors die Intensität des Stimulationslichts mit einer Trägerfrequenz moduliert wird. Die Modulation der Intensität des Stimulationslichts erfolgt durch eine Modulation der Laserleistung oder der Intensität des vom Laser erzeugten Lichts einer bestimmten Intensität mittels eines akustooptischen Modulators. Das bei der Erfassung des Emissionslichts erhaltene Detektorsignal wird nach einer Filterung durch einen Bandpassfilter in einem Lock-In-Verstärker unter Berücksichtigung der Trägerfrequenz verarbeitet.

Bei dieser Vorrichtung kann es - insbesondere bei höheren Trägerfrequenzen in der Größenordnung von mehreren Megahertz (MHz) - vorkommen, dass die typischen Abklingzeiten des im Speicherleuchtstoff angeregten Emissionslichts zu groß sind im Verhältnis zur Periodendauer der Modulation der Stimulationslichtintensität. In diesen Fällen ist der Speicherleuchtstoff "zu langsam", um die Modulation der Stimulationslichtintensität ausreichend genau in eine entsprechende Modulation der Emissionslichtintensität umzuwandeln. Eine zuverlässige Demodulation des vom Detektor erzeugten Detektorsignals ist daher nicht oder nur bedingt möglich, wodurch die Bildqualität signifikant beeinträchtigt werden kann.

Es ist Aufgabe der Erfindung, eine Vorrichtung sowie ein entsprechendes Verfahren anzugeben, durch welche bzw. welches eine möglichst hohe Bildqualität der ausgelesenen Röntgeninformationen bei gleichzeitig einfachem Aufbau erreicht wird.

Diese Aufgabe wird durch eine Vorrichtung gemäß Anspruch 1 bzw. durch ein entsprechendes Verfahren gemäß Anspruch 12 gelöst.

Bei der erfindungsgemäßen Vorrichtung ist ein Modulator vorgesehen, durch welchen das vom Detektor erzeugte Detektorsignal mit mindestens einem periodischen Trägersignal moduliert wird, wobei mindestens ein moduliertes Detektorsignal erhalten wird. Darüber hinaus ist ein Demodulator zur Demodulation des modulierten, und ggf. verstärkten und/oder digitalisierten, Detektorsignals, bei welcher ein demoduliertes Detektorsignal erhalten wird, vorgesehen. Im entsprechenden erfindungsgemäßen Verfahren ist vorgesehen, dass das vom Detektor erzeugte Detektorsignal mit mindestens einem periodischen Trägersignal moduliert wird, wobei mindestens ein moduliertes Detektorsignal erhalten wird, welches, ggf. nach einer Verstärkung und/oder Digitalisierung, demoduliert wird, wobei ein demoduliertes Detektorsignal erhalten wird.

Die Erfindung basiert auf dem Gedanken, anstelle einer Modulation bei der Anregung des Emissionslichts das bei der Erfassung des Emissionslichts vom Detektor erzeugte Detektorsignal zu modulieren. Im Unterschied zu der aus dem Stand der Technik bekannten Vorrichtung können hierbei keine Informationsverluste bei einer Umwandlung der Modulation der Stimulationslichtintensität in eine entsprechende Emissionslichtintensität mehr auftreten. Gleichzeitig wird ein moduliertes Detektorsignal erhalten, welches durch geeignete Signalverarbeitungsmethoden, z.B. durch Filterung und/oder Verstärkung, verarbeitet und in zuverlässiger Weise demoduliert werden kann. Hierdurch wird, insbesondere auch bei Speicherleuchtstoffen mit relativ langen Abklingzeiten, eine hohe Bildqualität des ausgelesenen Röntgenbildes auf einfache Weise gewährleistet.

Als Detektor wird vorzugsweise ein Photomultiplier oder eine Avalanche-Diode verwendet, welcher bzw. welche aufgrund seiner bzw. ihrer hohen Lichtempfindlichkeit eine zuverlässige Erfassung des Emissionslichts selbst bei Röntgenbilder, die mit einer relativ schwachen Röntgendosis aufgenommen wurden, gewährleistet. Gegebenenfalls kann als Detektor auch ein Photomultiplier-Array oder ein Avalanche-Dioden-Array verwendet werden, welches mehrere in einer Reihe angeordnete Photomultiplier bzw. Avalanche-Dioden umfasst.

Es ist bevorzugt, dass das Detektorsignal eine bestimmte Bandbreite und das periodische Trägersignal eine bestimmte Trägerfrequenz aufweist, welche mindestens doppelt so groß ist wie die Bandbreite des Detektorsignals. Hierdurch wird eine besonders zuverlässige Übertragung der im Detektorsignal enthaltenen Röntgeninformationen gewährleistet.

Vorzugsweise liegt die Bandbreites des Detektorsignals zwischen etwa 0 und 2 MHz, insbesondere zwischen etwa 0 und 1 MHz. Die Trägerfrequenz weist vorzugsweise einen zwischen etwa 5 und etwa 15 MHz liegenden Wert auf. Hierdurch wird eine ausreichend große Bandbreite der im Emissionslicht enthaltenen Röntgeninformationen einerseits mit einem Trägersignal mit einer ausreichend hohen Trägerfrequenz andererseits übertragen, so dass Verluste bei der Verarbeitung der Detektorsignale auf ein Minimum reduziert werden.

Bei einer weiteren bevorzugten Ausgestaltung der Erfindung ist der Modulator zur Modulation des vom Detektor, insbesondere von einem Photomultiplier oder einer Avalanche-Diode, erzeugten Detektorsignals mit dem periodischen Trägersignal sowie mit mindestens einem weiteren periodischen Trägersignal ausgebildet, wobei mindestens zwei modulierte Detektorsignale erhalten werden. Diese können parallel übertragen und verarbeitet werden, so dass Störeinflüsse auf die modulierten Detektorsignale, beispielsweise aufgrund von von der Hochspannungsquelle des Photomultipliers verursachten Störsignalen im Massepotenzial oder elektromagnetischen Störungen, auf einfache Weise eliminiert oder zumindest reduziert werden können.

Vorzugsweise entspricht das weitere periodische Trägersignal dem invertierten periodischen Trägersignal. Auf diese Weise werden zwei modulierte Detektorsignale erhalten, aus denen durch einfache Differenzbildung bei der nachfolgenden Analog-Digital-Wandlung bzw. Demodulation ein von Störeinflüssen befreites demoduliertes Detektorsignal erhalten wird. Aufgrund der Modulation des unmodulierten Detektorsignals mit zwei im Verhältnis zueinander umgekehrten Trägersignalen kann insoweit auch von einer "symmetrischen" Übertragung der modulierten Detektorsignale gesprochen werden.

Das periodische Trägersignal kann insbesondere einen rechteckförmigen Verlauf aufweisen. Dadurch kann die Modulation des Detektorsignals auf einfache Weise realisiert werden, beispielsweise durch Schalter, die vom rechteckförmigen Trägersignalverlauf gesteuert werden können.

Es ist außerdem bevorzugt, dass der Modulator mindestens einen Eingang, mindestens zwei Ausgänge und mehrere Schalter aufweist, deren Zustand d.h. "offen" oder "geschlossen" bzw. "0" oder "1", mit Hilfe des Trägersignals gesteuert werden können und das am Eingang anliegende Detektorsignal mit den Ausgängen und einem Bezugspotenzial derart verschalten, dass das Detektorsignal abwechselnd am ersten bzw. zweiten Ausgang anliegt. Hierdurch wird eine besonders einfach zu realisierende und zuverlässige Möglichkeit geschaffen, zwei modulierte Detektorsignale mit im Verhältnis zueinander umgekehrten Trägersignalen zu erzeugen.

Bei einer weiteren vorteilhaften Ausgestaltung ist ein Verstärker zur Verstärkung der modulierten Detektorsignale mit einem vorgebbaren Verstärkungsfaktor vorgesehen. Hierdurch ist es möglich, die Verstärkung der modulierten Detektorsignale so zu wählen, dass diese im optimalen Arbeitsbereich nachgeschalteter Signalverarbeitungseinheiten, beispielsweise eines Analog-Digital-Wandlers und/oder eines Demodulators, liegen. Damit wird eine zuverlässige Signalverarbeitung gewährleistet, wobei gleichzeitig auf zusätzliche, in unterschiedlichen Arbeitsbereichen betriebenen oder betreibbaren Signalverarbeitungseinheiten verzichtet werden kann.

Diese Ausgestaltung umfasst vorzugsweise eine Verarbeitungseinheit zur Vorgabe des Verstärkungsfaktors für die Verstärkung der modulierten Detektorsignale in Abhängigkeit von mindestens einem zuvor erhaltenen, ggf. modulierten und/oder verstärkten und/oder digitalisierten und/oder demodulierten, Detektorsignal. Bei den zuvor erhaltenen Detektorsignalen handelt es sich um Signale, die beim Erfassen des von Punkten in einer vorher ausgelesenen Zeile der Speicherleuchtstoffschicht oder des von vorher ausgelesenen Punkten in der aktuellen Zeile emittierten Emissionslichts erhalten wurden. Die Ermittlung des aktuellen Verstärkungsfaktors anhand vorheriger Detektorsignale stellt eine einfach zu realisierende und gleichzeitig zuverlässige Methode dar, um eine Verarbeitung, insbesondere Analog-Digital-Wandlung und/oder Demodulation, der verstärkten modulierten Detektorsignale im optimalen Arbeitsbereich der jeweiligen Signalverarbeitungseinheit zu gewährleisten.

Zusätzlich zur Modulation des bei der Erfassung des Emissionslichts vom Detektor erzeugten Detektorsignals kann auch die Empfindlichkeit des Detektors für das zu erfassende Emissionslicht moduliert werden. Es kann hierbei vorgesehen sein, dass der Detektor als Photomultiplier ausgebildet ist, welcher eine Kathode, eine Anode und mehrere Dynoden umfasst, und der Modulator ein periodisches Trägersignal in Form einer Wechselspannung erzeugt, die an der Kathode und/oder Anode und/oder mindestens einer der Dynoden des Photomultipliers anliegt. Die Empfindlichkeit des Photomultipliers für das zu erfassende Emissionslicht, d.h. das Ausmaß der Vervielfachung der durch das Emissionslicht in der Kathode erzeugten Photoelektronen, wird wesentlich durch die Spannungsverteilung zwischen Kathode, Dynoden und Anode bestimmt. Durch eine Modulation der an der Kathode, Anode bzw. den Dynoden anliegenden Spannung kann daher das Verstärkungsverhalten des Photomultipliers und damit dessen Empfindlichkeit für das Emissionslicht moduliert werden. Der an der Anode abgreifbare Ausgangsstrom stellt somit eine Überlagerung des zeitlichen Verlaufs der Emissionslichtintensität einerseits und des Trägersignals andererseits dar.

Weitere Varianten, Merkmale und Vorteile der Erfindung ergeben sich aus der folgenden Beschreibung bevorzugter Ausführungsformen und Anwendungsbeispiele, wobei Bezug auf die beigefügten Zeichnungen genommen wird. Es zeigen:
- Fig. 1: eine Vorrichtung zum Auslesen einer Speicherleuchtstoffschicht;
- Fig. 2: ein erstes Beispiel für eine elektrische Schaltung zu der in Fig. 1 dargestellten Vorrichtung;
- Fig. 3: ein zweites Beispiel für eine elektrische Schaltung zu der in Fig. 1 dargestellten Vorrichtung; und
- Fig. 4: eine Schaltskizze zu dem in Fig. 3 dargestellten Modulator.

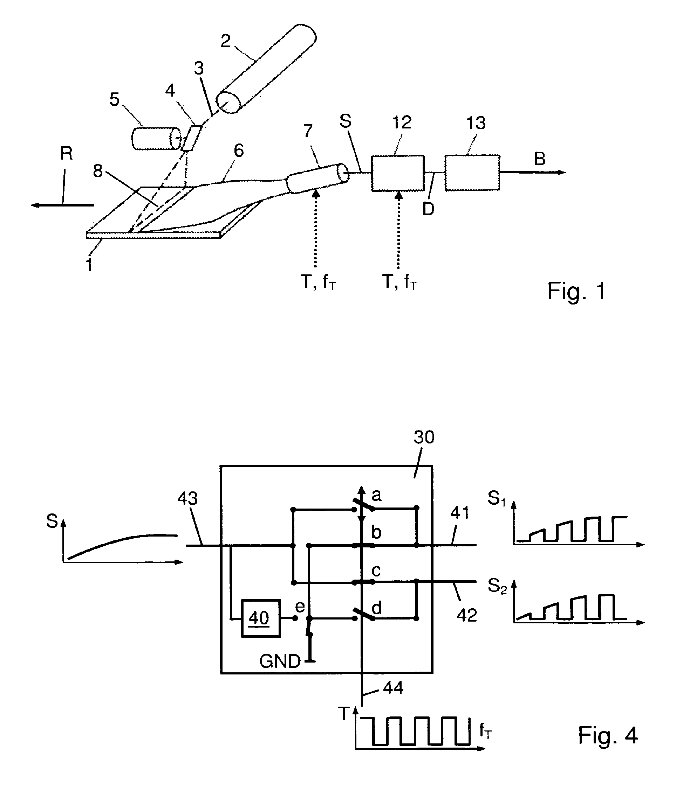

Fig. 1 zeigt eine Vorrichtung zum Auslesen einer Speicherleuchtstoffschicht 1. Durch einen Laser 2 wird ein Stimulationslichtstrahl 3 erzeugt, welcher durch ein von einem Motor 5 in Rotation versetztes Ablenkelement 4 derart abgelenkt wird, dass sich dieser entlang einer Zeile 8 über die auszulesende Speicherleuchtstoffschicht 1 bewegt. Das Ablenkelement 4 ist vorzugsweise als Spiegel, insbesondere als Polygonspiegel oder Galvanometerspiegel, ausgebildet.

Während der Bewegung des Stimulationslichtstrahls 3 entlang der Zeile 8 sendet die Speicherleuchtstoffschicht 1 in Abhängigkeit der darin gespeicherten Röntgeninformation Emissionslicht aus, welches von einer optischen Sammeleinrichtung 6, beispielsweise einem Lichtleiterbündel oder einer Abbildungsoptik, gesammelt, weitergeleitet und von einem an die Sammeleinrichtung 6 gekoppelten Photomultiplier 7 erfasst und in ein entsprechendes analoges Detektorsignal S umgewandelt wird.

Der Photomultiplier 7, im Folgenden auch PMT genannt, umfasst im Wesentlichen eine Elektronenröhre mit einer Photokathode und einem nachgeschalteten Sekundärelektronenvervielfacher und ermöglicht eine Detektion schwacher Lichtsignale - bis hin zu einzelnen Photonen - sowie deren Umwandlung in elektrische Signale und deren Verstärkung.

Anstelle eines Photomultipliers 7 kann zur Erfassung des Emissionslichts auch eine sog. Avalanche-Diode verwendet werden, bei welcher es sich um einen Photodioden-Halbleiterdetektor handelt, der ebenfalls zur Erfassung sehr schwacher Lichtintensitäten bis hin zu einzelnen Photonen geeignet ist. Avalanche-Dioden werden beispielsweise mit einem großen Vorwiderstand in Sperrrichtung betrieben. Durch die hohe Feldstärke reicht ein einzelnes Photon, um ein Elektron freizusetzen, das vom Feld in der Sperrschicht beschleunigt wird und einen Lawineneffekt auslöst. Der Vorwiderstand verhindert, dass die Diode durch einen zu hohen Strom leitfähig bleibt. Die Diode geht dadurch wieder in den gesperrten Zustand über.

Grundsätzlich können anstelle eines Photomultipliers 7 auch andere Detektoren oder Detektorsysteme verwendet werden, die relative schwache Lichtintensitäten erfassen können, wie z.B. geeignete Photodioden oder Photodioden-Arrays oder Avalanche-Dioden-Arrays.

Bei einer Weiterverarbeitung des vom Photomultiplier 7 bzw. von der Avalanche-Diode erzeugten Detektorsignals S in den Einrichtungen 12, 13 werden Bildsignalwerte B für einzelne Bildpunkte des ausgelesenen Röntgenbildes abgeleitet. Im dargestellten Beispiel wird das analoge Detektorsignal S zunächst einer Verarbeitungseinrichtung 12 zugeführt und dort in digitale Detektorsignalwerte D umgewandelt, indem das Detektorsignal S mit einer vorgegebenen Abtastfrequenz abgetastet wird, wobei pro Abtastvorgang ein digitaler Detektorsignalwert D in digitalen Einheiten erhalten wird. Die Abtastfrequenz liegt beispielsweise bei etwa 1 MHz. Das Abtasten des analogen Detektorsignals S erfolgt vorzugsweise nach dem sog. Sample-and-Hold-Prinzip, bei welchem die jeweils aktuelle analoge Signalhöhe des zu einem Abtastzeitpunkt anliegenden Signals gehalten und in einen entsprechenden digitalen Detektorsignalwert D umgewandelt wird. Aus den digitalen Detektorsignalwerten D werden schließlich in einer Recheneinheit 13 die einzelnen Bildsignalwerte B ermittelt, indem zwei oder mehrere Detektorsignalwerte D zu einem Bildpunkt zusammengefasst werden und daraus, beispielsweise durch Mittelwertbildung, ein zu diesem Bildpunkt gehörender Bildsignalwert B berechnet wird.

Durch einen Transport der Speicherleuchtstoffschicht 1 in Transportrichtung R wird ein sukzessives Auslesen einzelner Zeilen 8 erreicht und damit ein zweidimensionales, aus einzelnen Bildpunkten mit jeweils einem zugehörigen Bildsignalwert B bestehendes Röntgenbild erhalten.

Das Verstärkungsverhalten des Photomultipliers 7 oder das vom Photomultiplier 7 oder von einer Avalanche-Diode erzeugte Detektorsignal S wird mit einem Trägersignal T, das eine Trägerfrequenz f_{T} aufweist, moduliert, was in dem in Fig. 1 gezeigten Beispiel nur symbolisch in Form von gestrichelten Pfeilen angedeutet ist, und das hierbei erhaltene modulierte Detektorsignal, ggf. nach einer Filterung und/oder Verstärkung, demoduliert. Dies wird im Folgenden näher erläutert.

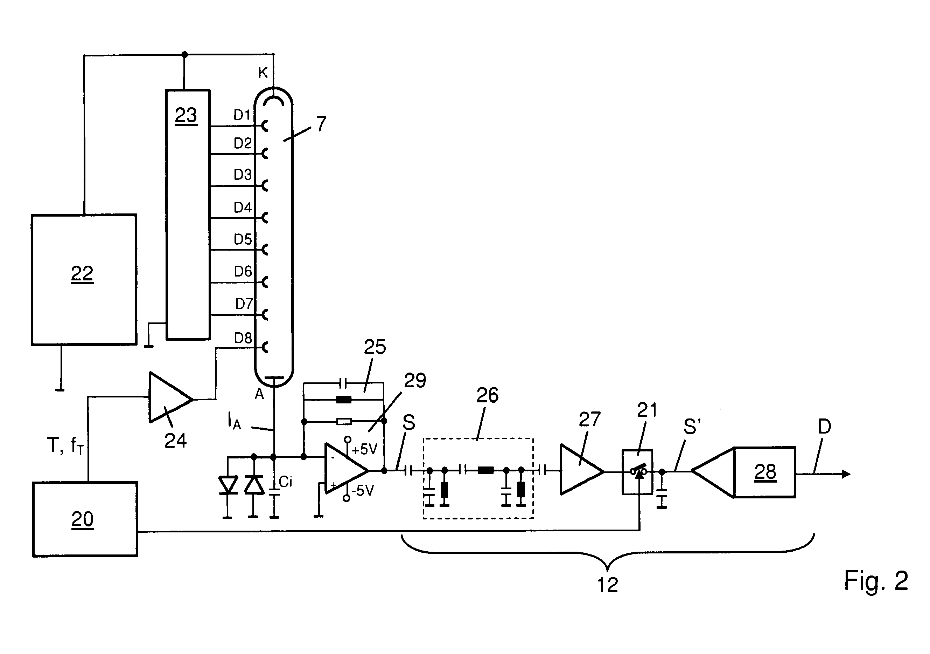

Fig. 2 zeigt ein erstes Beispiel einer elektrischen Schaltung zu der in Fig. 1 dargestellten Vorrichtung. Der Photomultiplier 7 umfasst eine Elektronenröhre mit einer Anode A, einer Kathode K sowie mehreren Dynoden D1 bis D8. Grundsätzlich ist die elektrische Schaltung aber auch für Photomultiplier 7 mit einer anderen, insbesondere kleineren, Anzahl von Dynoden geeignet.

Eine von einer Hochspannungsquelle 22 erzeugte Hochspannung liegt einerseits an der Kathode K an und wird andererseits über einen Spannungsteiler 23 auf die einzelnen Dynoden D1 bis D7 verteilt. Typische Hochspannungen liegen zwischen etwa 200 und 1000 V. Als Spannungsteiler 23 wird vorzugsweise ein sog. aktiver Spannungsteiler verwendet, bei welchem eine Aufteilung der Hochspannung in einzelne Teilspannungen mittels Transistorschaltungen realisiert wird, wodurch Leistungsverluste im Vergleich zu ausschließlich aus ohmschen Widerständen aufgebauten Spannungsteilerschaltungen deutlich reduziert werden. Ein Hochfrequenzgenerator 20 erzeugt ein Trägersignal T, welches eine Trägerfrequenz f_{T} aufweist, durch einen Modulationsverstärker 24 verstärkt wird und an der Dynode D8 anliegt.

Wenn von der Speicherleuchtstoffschicht 1 ausgesandtes Emissionslicht in den Photomultiplier 7 eintritt, so werden in der Kathode K Photoelektronen erzeugt, welche entlang der Strecke der einzelnen Dynoden D1 bis D8 vervielfacht werden. Das Ausmaß der Elektronenvervielfachung im Photomultiplier 7 wird hierbei wesentlich durch die Spannungsverteilung zwischen Kathode, Dynoden und Anode bestimmt, wobei im vorliegenden Beispiel die Modulation der an der Dynode D8 anliegenden Spannung mit der Trägerfrequenz f_{T} eine Modulation des Ausmaßes der Elektronenvervielfachung, d. h. des Verstärkungsverhaltens des Photomultipliers 7, bewirkt. Auf diese Weise wird die Empfindlichkeit des Photomultipliers 7 für das zu erfassende Emissionslicht mit einer Trägerfrequenz f_{T} moduliert. Dementsprechend sind in dem an der Anode A abgegriffenen Ausgangsstrom I_{A} des Photomultipliers 7 der zeitliche Verlauf der Emissionslichtintensität einerseits sowie des Trägersignals T andererseits überlagert.

Der Ausgangsstrom I_{A} wird über einen Strom-Spannungswandler 29, welcher vorzugsweise einen Operationsverstärker mit parallel geschaltetem ohmschem Widerstand umfasst und welchem ein Schwingkreis 25 parallel geschaltet ist, in eine Ausgangsspannung S umgewandelt, die aufgrund der Modulation des Verstärkungsverhaltens des als Photomultiplier 7 ausgebildeten Detektors auch als moduliertes Detektorsignal bezeichnet wird. Der Schwingkreis 25 ist hierbei so dimensioniert, dass im Wesentlichen nur hochfrequente Anteile des Ausgangsstroms I_{A} in der Größenordnung der Trägerfrequenz f_{T} und darüber verstärkt werden.

Die auf diese Weise erhaltene Ausgangsspannung S wird in einem Bandpassfilter 26 gefiltert, welcher nur für diejenigen Anteile der Ausgangsspannung S durchlässig ist, welche innerhalb eines bestimmten Frequenzbereichs liegen. Dieser Frequenzbereich liegt vorzugsweise oberhalb der Trägerfrequenz f_{T} und weist eine Bandbreite auf, die der zu übertragenden Bandbreite entspricht. Bei einer Trägerfrequenz f_{T} von beispielsweise 10 MHz und einer zu übertragenden Bandbreite von beispielsweise bis zu 1 MHz würde der Frequenzbereich des Bandpassfilters 26, in welchem dieser durchlässig ist, zwischen etwa 10 MHz und etwa 11 MHz liegen.

Um eine möglichst zuverlässige Übertragung der im Detektorsignal S enthaltenen Röntgeninformationen zu gewährleisten, ist die Trägerfrequenz f_{T} vorzugsweise mindestens doppelt so groß wie die Bandbreite des zu übertragenden Signals. So beträgt bei einer zu übertragenden Bandbreite von 1 MHz die Trägerfrequenz f_{T} also mindestens 2 MHz.

Nach einer Verstärkung in einem Messverstärker 27 wird die gefilterte und verstärkte Spannung in einem Demodulator 21 demoduliert. Bei dem Demodulator handelt es sich vorzugsweise um einen Synchron-Demodulator, in welchem die Spannung synchron zur Phasenlage des vom Hochfrequenzgenerator 20 erzeugten Trägersignals T analysiert wird. Der im gezeigten Beispiel nur schematisch dargestellte Synchron-Demodulator umfasst hierzu vorzugsweise eine Sample-and-Hold-Schaltung, in welcher jeweils synchron zur Phasenlage des Trägersignals T der höchste Signalwert der gefilterten und verstärkten Spannung S ermittelt und aus den jeweils ermittelten höchsten Spannungswerten schließlich ein demoduliertes Signal S' erhalten wird. Letzteres wird schließlich in einem Analog-Digital-Wandler 28 in ein digitales Detektorsignal D umgewandelt. Bandpassfilter 26, Messverstärker 27, Demodulator 21 und Analog-Digital-Wandler 28 bilden in diesem Beispiel zusammen die in Fig. 1 gezeigte Verarbeitungseinrichtung 12. Mit Hilfe der oben beschriebenen elektrischen Schaltung wird unter anderem das Rauschen des Photomultipliers 7, insbesondere das mit abnehmender Frequenz f innerhalb der zu übertragenden Bandbreite zunehmende sog. 1/f-Rauschen, deutlich reduziert, so dass Emissionslicht selbst bei sehr niedrigen Intensitäten zuverlässig erfasst und übertragen werden kann, wodurch die Bildqualität des ausgelesenen Röntgenbildes insbesondere bei kleiner Röntgendosis, beispielsweise im Falle von mammographischen Röntgenaufnahmen, signifikant verbessert wird. Darüber hinaus braucht die üblicherweise auftretende Offsetdrift des Strom-Spannungswandlers 29 bei diesem Beispiel nur noch grob kompensiert zu werden, da die ausgelesenen Röntgeninformationen mit Hilfe des hochfrequenten Trägersignals T übertragen werden, so dass Gleichstromanteile, insbesondere der statische Offset des Strom-Spannungswandlers 29, nicht übertragen werden. Durch die Detektion des jeweiligen Höchstwertes des modulierten Detektorsignals S synchron zur Phasenlage des Trägersignals T wird darüber hinaus eine äußerst hohe Linearität des so gewonnenen demodulierten Detektorsignals S' erzielt.

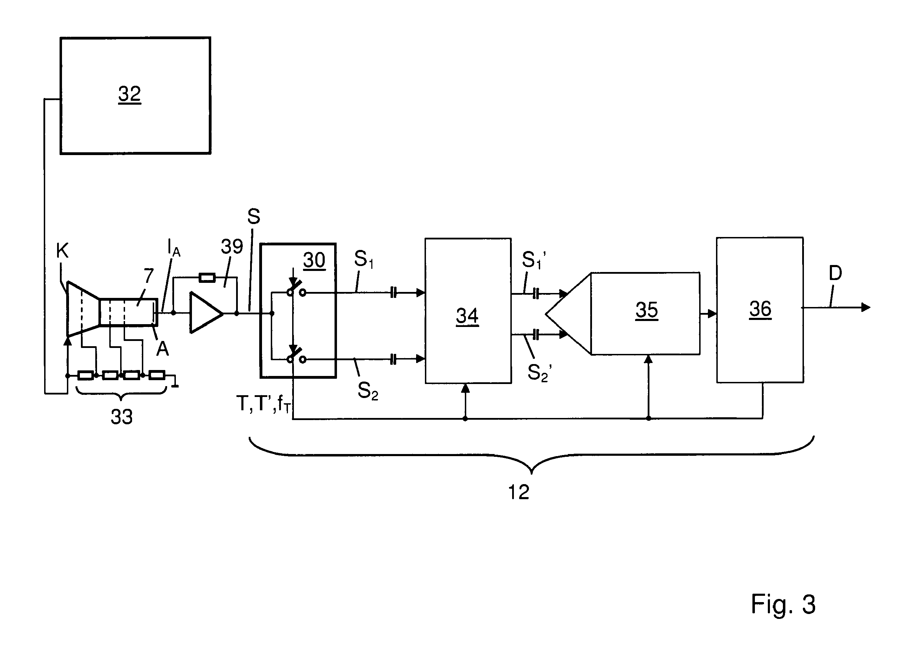

Fig. 3 zeigt ein zweites Beispiel einer elektrischen Schaltung zu der in Fig. 1 dargestellten Vorrichtung. Wie bei dem in Fig. 2 gezeigten Beispiel wird von einer Hochspannungsquelle 32 eine Hochspannung erzeugt, welche einerseits an der Kathode K des Photomultipliers 7 anliegt und andererseits über einen Spannungsteiler 33 auf die einzelnen Dynoden (gestrichelte Linien) verteilt wird. Der Spannungsteiler 33 ist in diesem Beispiel als passiver Spannungsteiler in Form einer aus ohmschen Widerständen bestehenden Schaltung ausgebildet, kann aber alternativ auch als aktiver Spannungsteiler, wie im Zusammenhang mit Fig. 2 erläutert, ausgebildet sein.

Der an der Anode A abgegriffene Ausgangsstrom I_{A} wird über einen Strom-Spannungswandler 39, welcher aus einem Operationsverstärker und einem dazu parallel geschalteten ohmschen Widerstand besteht, in eine Ausgangsspannung S umgewandelt.

Die Ausgangsspannung S wird in einem Hochfrequenzmodulator 30 mit einem hochfrequenten Rechtecksignal einerseits und einem diesem Rechtecksignal T entsprechenden invertierten Rechtecksignal T' andererseits moduliert, so dass zwei modulierte Signale S₁ und S₂ erhalten werden. Der Aufbau und die Funktionsweise des Modulators 30 ist in Fig. 3 stark vereinfacht dargestellt und wird im Folgenden anhand von Fig. 4 näher erläutert.

Die an einem Eingang 43 des Modulators 30 anliegende Ausgangsspannung S wird im Modulator 30 geteilt und mit Hilfe von Schaltern a bis d gegenüber einem definierten Potential, insbesondere einem Massepotential GND, in der Weise verschaltet, dass die Schalter a und d geöffnet sind, wenn die Schalter b und c geschlossen sind, und umgekehrt. Die Schalter a bis d werden durch das an einem weiteren Eingang 44 des Modulators 30 anliegende rechteckförmige Trägersignal T, das eine Trägerfrequenz f_{T} aufweist, in der Weise gesteuert, dass bei einem hohen Signalpegel des Trägersignals T die Schalter a und d geöffnet und die Schalter b und c geschlossen sind (dargestellter Zustand). Bei einem niedrigen Signalpegel des Trägersignals T dagegen sind die Schalter a und d geschlossen und die Schalter b und c geöffnet.

Auf diese Weise wird an einem ersten Ausgang 41 des Modulators 30 ein moduliertes Signal S₁ erhalten, welches einer Überlagerung der Ausgangsspannung S mit einem dem umgekehrten Trägersignal T entsprechenden Trägersignal T' entspricht. An einem zweiten Ausgang 42 des Modulators 30 wird ein moduliertes Detektorsignal S₂ erhalten, welches einer Überlagerung der Ausgangsspannung S mit dem Trägersignal T entspricht. Somit wird eine zweifache Modulation der Ausgangsspannung S mit dem am weiteren Eingang 44 des Modulators 30 anliegenden Trägersignal T einerseits und dem entsprechenden invertierten Trägersignal T' andererseits realisiert.

Anstelle des Massepotentials GND kann als Bezugspotential, gegenüber welchem die Ausgangsspannung S verschaltet wird, auch die invertierte Ausgangsspannung S verwendet werden, was durch Zuschalten eines Inverters 40, d.h. eines invertierenden Verstärkers, zwischen dem ersten Eingang 43 des Modulators 30 und dem Anschluss des Bezugspotentials GND realisiert werden kann. Dies kann beispielsweise durch einen Schalter erreicht werden, welcher je nach Schalterstellung entweder eine Verbindung mit dem Massepotenzial GND (dargestellter Zustand) oder dem Inverter 40 herstellt, wie in Fig. 4 in Form des Schalters e vereinfacht dargestellt.

Wie in Fig. 3 gezeigt, werden die modulierten Signale S₁ und S₂ in einer Verstärkungseinrichtung 34 verstärkt, wobei der Verstärkungsfaktor variabel ist und typischerweise Werte von Zweierpotenzen annimmt, d.h. 1, 2, 4, 8, 16, 32 usw. Bei der Verstärkungseinrichtung 34 handelt es sich vorzugsweise um einen Digitalverstärker mit variablem Verstärkungsfaktor, welcher auch als DVGA (Digital Variable Gain Amplifier) bezeichnet wird.

Die auf diese Weise erhaltenen verstärkten Signale S₁' und S₂' werden in einem Analog-Digital-Wandler 35 in ein digitales Signal umgewandelt, welches in einer nachgeschalteten digitalen Verarbeitungseinheit 36 ggf. gefiltert und durch Demodulation in ein demoduliertes digitales Detektorsignal D umgewandelt wird. Bei der digitalen Verarbeitungseinheit 36 handelt es sich vorzugsweise um eine programmierbare Anordnung von Logikgattern, einem sog. FPGA (Field Programmable Gate Array). Dies ist ein integrierter Schaltkreis, in welchen eine logische Schaltung in Abhängigkeit vom jeweiligen Anwendungsbereich programmiert werden kann.

In dem hier dargestellten Beispiel bilden der Modulator 30, die Verstärkungseinrichtung 34, der Analog-Digital-Wandler 35 und die digitale Verarbeitungseinheit 36 zusammen die in der in Fig. 1 gezeigten Vorrichtung dargestellte Verarbeitungseinrichtung 12.

Die digitale Verarbeitungseinheit 36 steuert den Modulator 30, insbesondere durch Vorgabe eines Trägersignals T mit einer definierten Trägerfrequenz f_{T}, und gibt darüber hinaus vor, mit welchem Verstärkungsfaktor die beiden modulierten Signale S₁ und S₂ in der Verstärkungseinrichtung 34 verstärkt werden sollen. Vorzugsweise wird der Verstärkungsfaktor (1, 2, 4, 8 usw.) für die Verstärkung der aktuellen Signale S₁ und S₂ in Abhängigkeit von der Höhe des demodulierten digitalen Detektorsignals D vorgegeben, welches in der Verarbeitungseinheit 36 aus zuvor erhaltenen Signalen S₁ und S₂ erzeugt wird. Dadurch kann auf einfache Weise erreicht werden, dass die von der Verstärkungseinrichtung 34 ausgegebenen Signale S₁' und S₂' stets im jeweiligen Arbeitsbereich des Analog-Digital-Wandlers 35 liegen, wodurch diese stets zuverlässig und genau digitalisiert werden können. Durch diese "Normierung" der Verstärkung der Signale S₁ und S₂ in der Verstärkungseinrichtung 34 vor deren Digitalisierung ist es daher möglich, nahezu beliebig große Dynamikbereiche mit einer beliebigen Bandbreite in entsprechende digitale Detektorsignale D umzuwandeln.

Im Folgenden werden weitere Aspekte der in Fig. 3 veranschaulichten elektrischen Schaltung beschrieben.

Die Umwandlung des Ausgangsstroms I_{A} des Photomultipliers 7 in eine Detektorsignal-Spannung S erfolgt in einem Strom-Spannungswandler 39, der vorzugsweise möglichst nahe am Photomultiplier 7 angeordnet ist, was z.B. durch ein entsprechendes Platinen-Design realisiert wird. Hierdurch wird bei der Umwandlung ein besonders hohes Signal-Rausch-Verhältnis im Detektorsignal S erzielt.

Das so gewonnene Detektorsignal S wird durch den Trägerfrequenzmodulator 30 in zwei hochfrequente Rechteckspannungen S₁ und S₂ umgewandelt, welche als "symmetrische" modulierte Detektorsignale an den DVGA 34 weitergeleitet werden, der vorzugsweise über verschiedene einstellbare Verstärkungen (x1, x2, x4, x8, x16 und x32) verfügt und somit als Mess- oder Arbeitsbereichserweiterung für den nachgeschalteten Analog-Digital-Wandler 35 fungiert, da die jeweilige Verstärkung so gewählt werden kann, dass die verstärkten modulierten Signale S₁ und S₂ stets im Arbeitsbereich des Analog-Digital-Wandlers 35 liegen und insofern als "normiert" betrachtet werden können. Da die modulierten Detektorsignale S₁ und S₂ durch den, vorzugsweise ebenfalls in unmittelbarer Nähe zum Photomultiplier 7 bzw. Modulator 30 angeordneten, DVGA 34 durch eine geeignete Wahl des jeweiligen Verstärkungsfaktors normiert werden, müssen die zu übertragenden verstärkten modulierten Detektorsignale S₁' und S₂' keine so große Dynamik mehr aufweisen. Durch die Normierung der Verstärkung vor der Übertragung können mit diesem Verfahren nahezu beliebig große Dynamik-Bereiche mit beliebiger Bandbreite übertragen werden. Dies ist insbesondere dann von Vorteil, wenn mit der Vorrichtung Röntgenaufnahmen ausgelesen werden sollen, die mit stark unterschiedlichen Röntgendosen aufgenommen worden sind, so dass beim Auslesen stark unterschiedliche Emissionslichtintensitäten zu erfassen sind.

Durch die "symmetrische" Übertragung der Signale S₁ und S₂ können von der GND-Führung auch keine Störungen mehr in Form von Störsignalen der Hochspannungsquelle 32 in das Bildsignal gelangen. So wird die Bildinformation ungestört mit einer niedrigen Dynamik übertragen. Im folgenden Analog-Digital-Wanlder 35 oder im Demodulator muss nur noch die Differenz zwischen den beiden Signalen S₁' und S₂' erfasst werden, um das eigentliche Bildsignal, d.h. die im unmodulierten Detektorsignal S enthaltenen relevanten Bildinformationen, zu erhalten. Offset-Instabilitäten im DVGA 34 spielen bei diesem Verfahren ebenfalls keine Rolle, weil diese durch die Differenzbildung bei der Demodulation kompensiert werden.

Durch eine digitale Signalverarbeitung im folgenden FPGA 36 kann eine nochmalige Filterung erfolgen, wodurch etwaige restliche Störeinflüsse unterdrückt werden können.

## Patentansprüche

1. Vorrichtung zum Auslesen von in einer Speicherleuchtstoffschicht (1) gespeicherter Röntgeninformation mit
- einer Bestrahlungseinrichtung (2, 4, 5) zum Bestrahlen der Speicherleuchtstoffschicht (1) mit Stimulationslicht (3), welches die Speicherleuchtstoffschicht (1) zur Aussendung von Emissionslicht anregen kann, und
- einem Detektor (7) zum Erfassen von von der Speicherleuchtstoffschicht (1) ausgehendem Emissionslicht und zum Umwandeln des erfassten Emissionslichts in ein Detektorsignal (S),
**gekennzeichnet durch** einen Modulator (30) zur Modulation des vom Detektor (7) erzeugten Detektorsignals (S) mit mindestens einem periodischen Trägersignal (T, T'), wobei mindestens ein moduliertes Detektorsignal (S₁, S₂) erhalten wird, und einen Demodulator (36) zur Demodulation des modulierten Detektorsignals (S₁, S₂), wobei ein demoduliertes Detektorsignal (D) erhalten wird.

2. Vorrichtung nach Anspruch 1, wobei das Detektorsignal (S) eine Bandbreite und das periodische Trägersignal (T) eine Trägerfrequenz (f_{T}) aufweist, welche mindestens doppelt so groß ist wie die Bandbreite des Detektorsignals (S).

3. Vorrichtung nach Anspruch 2, wobei die Bandbreite des Detektorsignals (S) zwischen etwa 0 und 2 MHz, insbesondere zwischen etwa 0 und 1 MHz, liegt.

4. Vorrichtung nach Anspruch 2 oder 3, wobei die Trägerfrequenz (f_{T}) einen zwischen etwa 5 und etwa 15 MHz liegenden Wert aufweist.

5. Vorrichtung nach einem der vorangehenden Ansprüche, wobei der Modulator (30) zur Modulation des vom Detektor (7) erzeugten Detektorsignals (S) mit dem periodischen Trägersignal (T) und mit mindestens einem weiteren periodischen Trägersignal (T') ausgebildet ist, wobei mindestens zwei modulierte Detektorsignale (S₁, S₂) erhalten werden.

6. Vorrichtung nach Anspruch 5, wobei das periodische Trägersignal (T) einen rechteckförmigen Verlauf aufweist.

7. Vorrichtung nach Anspruch 5 oder 6, wobei das weitere periodische Trägersignal (T') dem invertierten periodischen Trägersignal (T) entspricht.

8. Vorrichtung nach einem der vorangehenden Ansprüche, wobei der Modulator (30) mindestens einen Eingang (43), mindestens zwei Ausgänge (41, 42) und mehrere Schalter (a - d) aufweist, welche von dem Trägersignal (T) gesteuert werden und das am Eingang (43) anliegende Detektorsignal (S) mit den Ausgängen (41, 42) und einem Bezugspotenzial (GND) derart verschalten, dass das Detektorsignal (S) abwechselnd am ersten bzw. zweiten Ausgang (41, 42) anliegt.

9. Vorrichtung nach einem der vorangehenden Ansprüche, wobei ein Verstärker (34) zur Verstärkung der modulierten Detektorsignale (S₁, S₂) mit einem vorgebbaren Verstärkungsfaktor vorgesehen ist.

10. Vorrichtung nach Anspruch 9 mit einer Verarbeitungseinheit (36) zur Vorgabe des Verstärkungsfaktors für die Verstärkung der modulierten Detektorsignale (S₁, S₂) in Abhängigkeit von mindestens einem, gegebenenfalls modulierten und/oder verstärkten und/oder digitalisierten und/oder demodulierten, Detektorsignal (S bzw. S₁, S₂ bzw. S₁', S₂' bzw. D), welches zuvor bei einer Erfassung von Emissionslicht erhalten wurde.

11. Vorrichtung nach einem der vorangehenden Ansprüche, wobei der Detektor (7) als Photomultiplier oder als Avalanche-Diode ausgebildet ist.

12. Verfahren zum Auslesen von in einer Speicherleuchtstoffschicht (1) gespeicherter Röntgeninformation, bei welchem
- die Speicherleuchtstoffschicht (1) mit Stimulationslicht (3), welches die Speicherleuchtstoffschicht (1) zur Aussendung von Emissionslicht anregen kann, bestrahlt wird und
- von der Speicherleuchtstoffschicht (1) ausgehendes Emissionslicht von einem Detektor (7) erfasst und in ein Detektorsignal (S) umgewandelt wird,
**dadurch gekennzeichnet, dass** das vom Detektor (7) erzeugte Detektorsignals (S) mit mindestens einem periodischen Trägersignal (T, T') moduliert wird, wobei mindestens ein moduliertes Detektorsignal (S₁, S₂) erhalten wird, welches demoduliert wird, wobei ein demoduliertes Detektorsignal (D) erhalten wird.

## Claims

1. An apparatus for reading out X-ray information stored in a storage phosphor layer (1) comprising
- an irradiation device (2, 4, 5) for irradiating the storage phosphor layer (1) with stimulation light (3) which can stimulate the storage phosphor layer (1) to emit emission light, and
- a detector (7) for detecting emission light passing out of the storage phosphor layer (1) and for converting the detected emission light into a detector signal (S),
**characterised by** a modulator (30) for modulating the detector signal (S) generated by the detector (7) with at least one periodic carrier signal (T, T'), at least one modulated detector signal (S₁, S₂) being obtained, and a demodulator (36) for demodulating the modulated detector signal (S₁, S₂), a demodulated detector signal (D) being obtained.

2. The apparatus according to Claim 1, the detector signal (S) having a band width and the periodic carrier signal (T) having a carrier frequency (f_{T}) which is at least twice as large as the band width of the detector signal (S).

3. The apparatus according to Claim 2, the band width of the detector signal (S) being between approximately 0 and 2 MHz, in particular between approximately 0 and 1 MHz.

4. The apparatus according to Claim 2 or 3, the carrier frequency (f_{T}) having a value between approximately 5 and approximately 15 MHz.

5. The apparatus according to any of the preceding claims, the modulator (30) for modulating the detector signal (S) generated by the detector (7) being formed with the periodic carrier signal (T) and with at least one further periodic carrier signal (T'), at least two modulated detector signals (S₁, S₂) being obtained.

6. The apparatus according to Claim 5, the periodic carrier signal (T) having a rectangular progression.

7. The apparatus according to Claim 5 or 6, the further periodic carrier signal (T') corresponding to the inverted periodic carrier signal (T).

8. The apparatus according to any of the preceding claims, the modulator (30) having at least one inlet (43), at least two outlets (41, 42) and a number of switches (a - d) which are controlled by the carrier signal (T) and the detector signal (S) lying at the inlet (43) being connected to the outlets (41, 42) and a reference potential (GND) such that the detector signal (S) lies alternately on the first and the second outlet (41, 42).

9. The apparatus according to any of the preceding claims, an amplifier (34) being provided to amplify the modulated detector signals (S₁, S₂) with a pre-specifiable amplification factor.

10. The apparatus according to Claim 9 comprising a processing unit (36) for specifying the amplification factor for the amplification of the modulated detector signals (S₁, S₂) depending on at least one optionally modulated and/or amplified and/or digitalised and/or demodulated detector signal (S or S₁, S₂ or S₁', S₂' or D) which has previously been obtained by detection of emission light.

11. The apparatus according to any of the preceding claims, the detector (7) being in the form of a photomultiplier or of an avalanche diode.

12. A method for reading out X-ray information stored in a storage phosphor layer (1), wherein
- the storage phosphor layer (1) is irradiated with stimulation light (3) which can stimulate the storage phosphor layer (1) to emit emission light, and
- emission light passing out of the storage phosphor layer (1) is detected by a detector (7) and converted into a detector signal (S),
**characterised in that** the detector signal (S) generated by the detector (7) is modulated with at least one periodic carrier signal (T, T'), at least one modulated signal (S₁, S₂) being obtained which is demodulated, a demodulated detector signal (D) being obtained.

## Revendications

1. Dispositif de lecture d'informations radiographiques enregistrées dans une couche d'enregistrement luminescente (1), comportant :
- un dispositif d'irradiation (2, 4, 5) destiné à irradier la couche d'enregistrement luminescente (1) avec de la lumière de stimulation (3) susceptible d'exciter la couche d'enregistrement luminescente (1) pour émettre de la lumière d'émission, et
- un détecteur (7) destiné à détecter la lumière d'émission issue de la couche d'enregistrement luminescente (1) et à transformer la lumière d'émission détectée en un signal de détecteur (S),
**caractérisé par** un modulateur (30) destiné à moduler le signal de détecteur (S) produit par le détecteur (7) par au moins un signal de porteuse périodique (T, T'), moyennant quoi l'on obtient au moins un signal de détecteur modulé (S₁, S₂), et un démodulateur (36) destiné à démoduler le signal de détecteur modulé (S₁, S₂), moyennant quoi l'on obtient un signal de détecteur démodulé (D).

2. Dispositif selon la revendication 1, dans lequel le signal de détecteur (S) présente une largeur de bande, et le signal de porteuse périodique (T) présente une fréquence de porteuse (f_{T}) qui est au moins deux fois plus grande que la largeur de bande du signal de détecteur (S).

3. Dispositif selon la revendication 2, dans lequel la largeur de bande du signal de détecteur (S) se situe entre environ 0 et 2 MHz, notamment entre environ 0 et 1 MHz.

4. Dispositif selon la revendication 2 ou 3, dans lequel la fréquence de porteuse (f_{T}) présente une valeur située entre environ 5 et environ 15 MHz.

5. Dispositif selon l'une des revendications précédentes, dans lequel le modulateur (30) est conçu pour moduler le signal de détecteur (S), produit par le détecteur (7), par le signal de porteuse périodique (T) et par au moins un autre signal de porteuse périodique (T'), moyennant quoi l'on obtient au moins deux signaux de détecteur modulés (S₁, S₂).

6. Dispositif selon la revendication 5, dans lequel le signal de porteuse périodique (T) a une forme d'onde rectangulaire.

7. Dispositif selon la revendication 5 ou 6, dans lequel l'autre signal de porteuse périodique (T') correspond au signal de porteuse périodique (T) inversé.

8. Dispositif selon l'une des revendications précédentes, dans lequel le modulateur (30) présente au moins une entrée (43), au moins deux sorties (41, 42) et plusieurs commutateurs (a - d) qui sont commandés par le signal de porteuse (T) et qui connectent le signal de détecteur (S) présent à l'entrée (43) avec les sorties (41, 42) et un potentiel de référence (GND) de telle manière que le signal de détecteur (S) soit alternativement présent au niveau de la première et de la deuxième sortie (41, 42).

9. Dispositif selon l'une des revendications précédentes, dans lequel il est prévu un amplificateur (34) destiné à amplifier les signaux de détecteur modulés (S₁, S₂) par un facteur d'amplification prédéfinissable.

10. Dispositif selon la revendication 9, comportant une unité de traitement (36) destinée à définir le facteur d'amplification relatif à l'amplification des signaux de détecteur modulés (S₁, S₂) en fonction d'au moins un signal de détecteur éventuellement modulé et/ou amplifié et/ou numérisé et/ou démodulé (respectivement S ou bien S₁, S₂ ou bien S₁', S₂' ou bien D), lequel a été préalablement obtenu lors d'une détection de lumière d'émission.

11. Dispositif selon l'une des revendications précédentes, dans lequel le détecteur (7) est conçu sous la forme d'un photomultiplicateur ou d'une diode avalanche.

12. Procédé de lecture d'informations radiographiques enregistrées dans une couche d'enregistrement luminescente (1), dans lequel :
- la couche d'enregistrement luminescente (1) est irradiée par de la lumière de stimulation (3) qui est capable d'exciter la couche d'enregistrement luminescente (1) pour émettre de la lumière d'émission, et
- la lumière d'émission issue de la couche d'enregistrement luminescente (1) est détectée par un détecteur (7) et est transformée en un signal de détecteur (S),
**caractérisé en ce que** le signal de détecteur (S) produit par le détecteur (7) est modulé par au moins un signal de porteuse périodique (T, T'), moyennant quoi l'on obtient au moins un signal de détecteur modulé (S₁, S₂), lequel est démodulé, moyennant quoi l'on obtient un signal de détecteur démodulé (D).
